# EUROPEAN PATENT APPLICATION

(11) **EP 4 016 155 A1**
(43) Date of publication of application: **22.06.2022**
(21) Application number: 20216217.8
(22) Date of filing: 21.12.2020
(51) Int. Cl.: G02B 6/44

(54) **ROLLABLE OPTICAL FIBER RIBBON AND METHOD FOR MANUFACTURING THE SAME**

(71) Applicant: Taihan Fiberoptics Co., Ltd., Ansan-si, Gyeonggi-do 15601 (KR)
(72) Inventor: JEONG, Sam-Mo, 08797 Gwanak-gu Seoul (KR); CHO, Geun-Sik, 32271 Hongseong-gun, Chungcheongnam-do (KR); KANG, Do-Hyun, 32271 Hongseong-gun, Chungcheongnam-do (KR); KIM, Chang-Young, 32271 Yesan-gun, Chungcheongnam-do (KR)
(74) Representative: Michalski Hüttermann & Partner Patentanwälte mbB

(57) **Abstract**

Optical fiber ribbon is provided that can be rolled or folded. The optical fiber ribbon includes at least two optical fiber units (10) and an intermittent connection for intermittently connecting them. The optical fiber unit includes one optical fiber (1c), an optical fiber pair (1a, 1b) in which two optical fibers (1a, 1b) are continuously connected in a longitudinal direction by a continuous connection (11), and an intermittent connection (12) for intermittently connecting the optical fiber (1c) and the optical fiber pair (1a, 1b) along the longitudinal direction.

Compared to the optical fiber ribbon in which all fibers are connected continuously, the density of the optical fiber in the cable can be increased, and the workability of the fusion splicing is improved compared to the optical fiber ribbon in which all fibers connected intermittently.

## Description

### Technical Field

The present invention relates to an optical fiber ribbon that can be curled or folded and a method of manufacturing the same.

### Background Art

With the recent spread of 5G communication technology and increases of data centers, demand for ultra-high-density optical cables with a large number of optical fibers per unit area is increasing. Increased density of optical fibers reduces the diameter of the optical cable and reduces installation costs as existing facilities such as underground ducts can be used.

In this regard, rollable fiber optic ribbons have been proposed. For example, Japanese Patent Laid-Open No. 2007-279226, Japanese Patent Laid-Open No. 2011-169937, Japanese Patent Laid-Open No. 2014-228688, and U.S. Patent No. US8787718 disclosed optical fiber ribbon fabricated by intermittently connecting a plurality of optical fibers and made to be rolled. U.S. Patent No. US9939599 and U.S. Patent No. US10185105 disclose optical fiber ribbons having continuous connections among a plurality of optical fibers and made to be rolled or folded.

Although optical fiber ribbons having intermittent connections have better rolling properties and the density of optical fibers in the cable can be much increased, the workability of fusion splicing is not easy. The optical fiber ribbon having a continuous connection has better workability in fusion splicing, but has relatively poor rolling properties, making it relatively difficult to increase the density of optical fibers in a cable compared to intermittently connected optical fiber ribbons.

### Solution to Problem

An object of the present invention is to provide an optical fiber ribbon with improved workability of fusion splicing compared to intermittently connected optical fiber ribbons while increasing the density of optical fibers in a cable compared to the optical fiber ribbon connected continuously.

### Summary of Invention Technical Problem

In accordance with an aspect of the present invention, a rollable optical fiber ribbon is provided, the rollable optical fiber ribbon comprising: at least two (2) optical fiber units, each of the optical fiber unit including: an optical fiber, an connected optical fiber pair having two (2) optical fibers connected in a longitudinal direction by a continuous connection, and a first intermittent connection which intermittently connects the optical fiber and the connected optical fiber pair; and, a second intermittent connection which intermittently connects said at least two optical fiber units; wherein the first intermittent connection and the second intermittent connection are arranged alternately with a distance in the longitudinal direction, and wherein the continuous connection, the first connection and the second connection are arranged at a same one side of the ribbon between an upper side or a bottom side of the ribbon.

In accordance with other aspect of the present invention, an optical fiber cable comprising the aforementioned rollable optical fiber ribbon is provided.

In accordance with another aspect of the present invention, a method for fabricating the aforementioned rollable optical fiber ribbon is provided, the method comprising the steps of: (a) arranging a plurality of optical fibers in parallel; and (b) forming the continuous connection, the first intermittent connection and the second intermittent connection on the plurality of optical fibers arranged in the step (a).

### Advantageous Effects of Invention

According to the present invention, an optical fiber ribbon is provided which has improved workability of fusion splicing compared to intermittently connected optical fiber ribbons while increasing the density of optical fibers in a cable compared to the optical fiber ribbon connected continuously.

### Brief Description of Drawings

Fig. 1 shows an optical fiber unit of a rollable optical fiber ribbon according to an embodiment of present invention.
Fig. 2 is a cross-sectional view taken along line A-A of Fig. 1.
Fig. 3 is a cross-sectional view taken along line B-B of Fig. 1.
Fig. 4 shows a first possible arrangement using two optical fiber units shown in Fig. 1.
Fig. 5 shows a second possible arrangement using two optical fiber units shown in Fig. 1.
Fig. 6 shows a third possible arrangement using two optical fiber units shown in Fig. 1.
Fig. 7 shows a first embodiment of the rollable optical fiber ribbon including twelve (12) optical fibers using the optical fiber unit shown in Fig. 1.
Fig. 8 is a cross-sectional view taken along line A-A in Fig. 7.
Fig. 9 is a cross-sectional view taken along line B-B of Fig. 7.
Fig. 10 is a cross-sectional view taken along line C-C of Fig. 7.
Fig. 11 shows an embodiment in which connections have a different type of surfaces.
Fig. 12 shows a second embodiment of the rollable optical fiber ribbon including twelve (12) optical fibers using the optical fiber unit shown in Fig. 1.
Fig. 13 is a cross-sectional view taken along line A-A in Fig. 12.
Fig. 14 is a cross-sectional view taken along line B-B of Fig. 12.
Fig. 15 is a photograph of a sample of a rollable optical fiber ribbon having the arrangement shown in Fig. 7.
Fig. 16 shows a photograph of a sample of a rollable optical fiber ribbon having the arrangement shown in Fig. 12.
Fig. 17 schematically shows an apparatus for manufacturing a rollable optical fiber ribbon according to an embodiment of the present invention.

### Description of Embodiments

Embodiments of the present invention will be described in detail with reference to the accompanying drawings hereinafter. The same or similar reference numerals are assigned to the same or similar components, and redundant descriptions thereof will be omitted. In describing the embodiments disclosed in the present specification, when it is determined that a detailed description of related known technologies may obscure the subject matter of the embodiments disclosed in the present specification, the detailed description thereof will be omitted. The accompanying drawings are only for making it easier to understand the embodiments disclosed in the present specification, and the technical concepts disclosed in the present specification are not limited by the accompanying drawings.

Terms including ordinal numbers such as "first" and "second" can be used to describe various components, but these terms are only used to distinguish one component from another, and the technical meanings of corresponding components are not limited by these terms. Singular expressions such as "a" or "an" include plural expressions also unless the context clearly indicates otherwise.

As used herein, terms such as "comprises", "includes" or "have" should be understood as limiting the existence of features, steps, components, or combinations thereof described in the specification, and one or more other features. It is not intended to exclude the possibility of the presence or addition of features, steps, components, or combinations thereof.

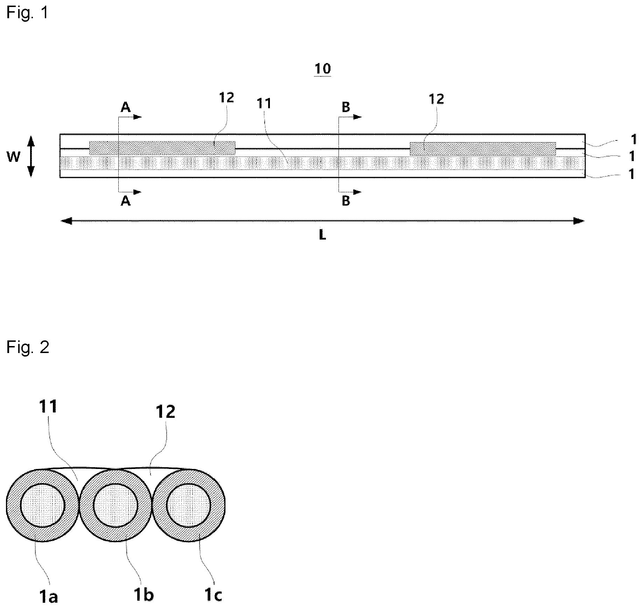

Fig. 1 shows an embodiment of an optical fiber unit for the rollable ribbon according to the present invention. In the present specification, "longitudinal direction" refers to a direction (L) in which an optical fiber is extended, as shown in FIG. 1, and "width direction" refers to a direction (W) which is orthogonal to longitudinal direction and in which optical fibers are arranged.

The optical fiber unit 10 includes three optical fibers 1. In the embodiment, the optical fiber has a core, a cladding and at least one coating layer. Of these three (3) optical fibers, two (2) optical fibers are connected in the longitudinal direction by a continuous connection 11 to form an optical fiber pair. The remaining one (1) optical fiber is intermittently connected to one optical fiber of the optical fiber pair in the longitudinal direction by the intermittent connection 12. In order to distinguish from the intermittent connection between the optical fiber units described later, the intermittent connection of the optical fiber unit 10 is referred to as a "first" intermittent connection 12.

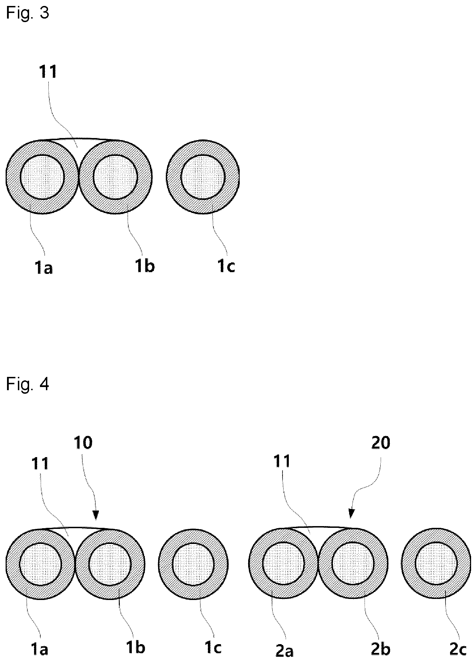

Figs. 2 and 3 are cross-sectional views taken along line A-A and line B-B of FIG. 1, respectively. In the section in which the first intermittent connection 12 exists, the optical fiber pair 1a and 1b and the remaining one (1) optical fiber 1c are connected by the first intermittent connection 12, thereby the three optical fibers 1a, 1b, 1c are all connected. On the other hand, in the section in which the first intermittent connection 12 does not exist, the optical fiber pair 1a and 1b and the remaining one (1) optical fiber 1c are not connected to each other.

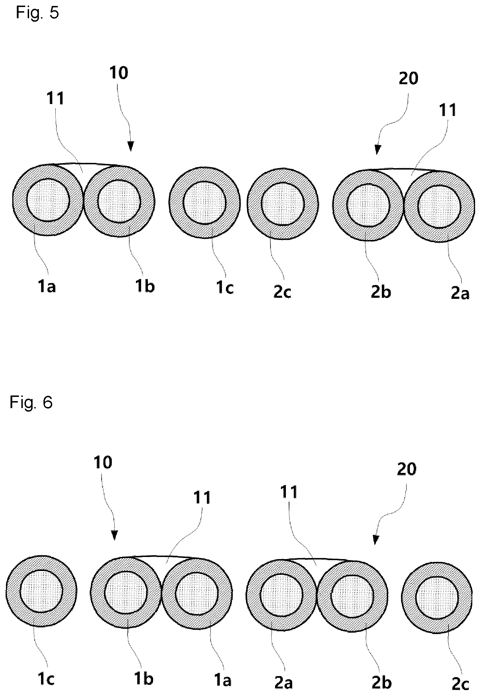

Figs. 4-6 show possible arrangements of two optical fiber units described above, respectively. In the arrangement shown in Fig. 4, an optical fiber 1c not forming an optical fiber pair in the first optical fiber unit 10 and an optical fiber 2a included in the optical fiber pair of the second optical fiber unit 20 are positioned adjacent to each other. In the arrangement shown in Fig. 5, an optical fiber 1c that does not form an optical fiber pair in the first optical fiber unit 10 and an optical fiber 2c that does not form an optical fiber pair in the second optical fiber unit 20 are positioned adjacent to each other. In the arrangement shown in Fig. 6, the optical fiber 1a included in the optical fiber pair of the first optical fiber unit 10 and the optical fiber 2a included in the optical fiber pair of the second optical fiber unit 20 are positioned adjacent to each other. In each arrangement depicted in each figure, if adjacent optical fibers of the two optical fiber units 10 and 20 are connected, an optical fiber ribbon including six optical fibers can be formed. In addition, when this connection is intermittent, the fiber optic ribbon may be rolled or folded in the width direction.

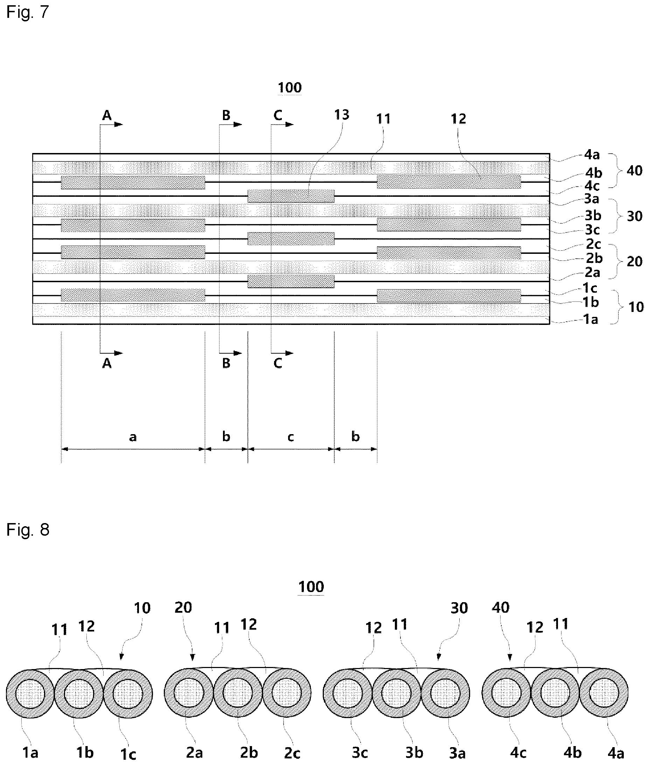

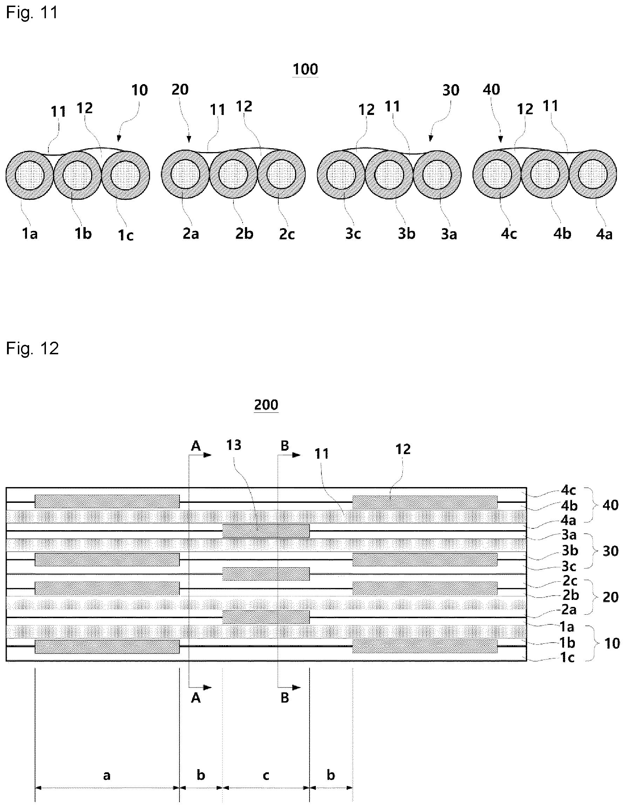

There are a plurality of arrangements for forming an optical fiber ribbon comprising twelve (12) optical fibers by using the optical fiber unit shown in Fig. 1. In this specification, two (2) embodiments among these arrangements will be described. An embodiment of the first possible arrangement is shown in Fig. 7 and other embodiment of the second possible arrangement is shown in Fig. 12. Each embodiment is the same in that it includes four optical fiber units 10, 20, 30 and 40, but the arrangement of the optical fiber units is different from each other.

In the optical fiber ribbon 100 shown in Fig. 7, the two optical fiber units 10 and 20 are in the arrangement shown in Fig. 4, and the remaining two optical fiber units 30 and 40 are symmetrical of the arrangement shown in Fig. 4. The optical fiber units are intermittently connected in the longitudinal direction. In the present specification, a connection part for intermittently connecting the optical fiber units along the longitudinal direction is referred to as a "second" intermittent connection 13.

In the embodiment shown in Fig. 7, the first intermittent connection 12 of the optical fiber units 10, 20, 30, and 40 have the same length a and are arranged side by side in the width direction. The second intermittent connection 13 connecting the optical fiber units have the same length c and are arranged side by side in the width direction. The distance between the first intermittent connection 12 and the second intermittent connection 13 is indicated by the reference numeral b. In the illustrated embodiment, the spacing between the second intermittent connection 13 and either of the two (2) first intermittent connection 12 adjacent in the longitudinal direction is the same. In the following, a reference sign indicating its length a, c or spacing b is used for indicating a corresponding section.

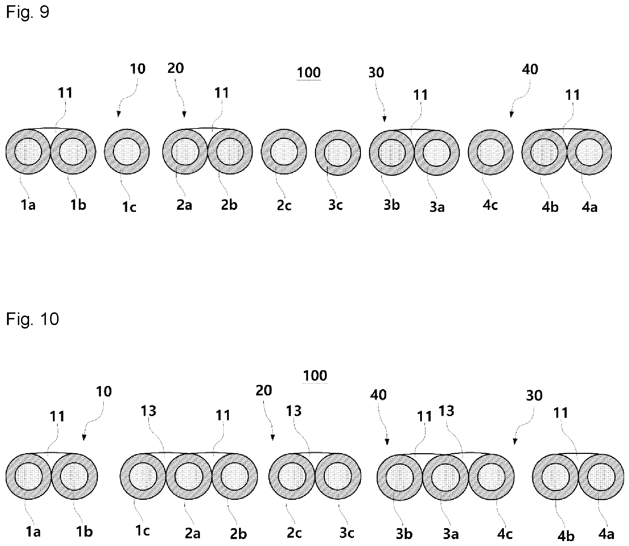

Fig. 8 is a cross-sectional view taken along line A-A of Fig. 7, Fig. 9 is a cross-sectional view taken along line B-B of Fig. 7, and Fig. 10 is a cross-sectional view taken along line C-C of Fig. 7.

In Fig. 8, in the optical fiber ribbon 100, optical fibers included in each optical fiber unit 10, 20, 30, and 40 are connected by the continuous connection 11 and the first intermittent connection 12 in the section a. There are no connections between each optical fiber unit. Referring to Fig. 9, in section b, only the continuous connection 11 exists, and the first intermittent connection 12 and the second intermittent connection 13 do not exist. Referring to Fig. 10, in section c, an optical fiber 1c not belonging to the optical fiber pair of the first optical fiber unit 10 and one of the optical fibers 2a belonging to the optical fiber pair of the second optical fiber unit 20 are connected by the second intermittent connection 13. Further, an optical fiber 2c that does not belong to the optical fiber pair of the second optical fiber unit 20 and an optical fiber 3c that does not belong to the optical fiber pair of the third optical fiber unit 30 are connected by the second intermittent connection 13. Finally, one of the optical fibers 3a belonging to the optical fiber pair of the third optical fiber unit 30 is connected to the optical fiber 4c that does not belong to the optical fiber pair of the fourth optical fiber unit 40 by the second intermittent connection 13.

Adjacent optical fibers connected by each of the connections 11, 12, 13 may contact each other or may be separated by a certain gap. In order to embed an optical fiber ribbon into an optical cable at an ultra-high density, it is preferable that optical fibers that are adjacent and connected to each other contact each other. In case there is a gap between these optical fibers, the gap is preferably about 15 µm or less.

In the illustrated embodiment, the connections are present only at the upper side when viewed in the width direction. Compared to the connections arranged to be mixed on the upper side and the lower side when viewed in the width direction, it is advantageous for the optical fiber ribbon to be rolled or folded if connections are arranged on the same side.

In the illustrated embodiment, the surface of the connection is shown almost flat. However, the surface of the connection may have a convex upward shape or a concave downward shape. In Figs. 8-10, the cross-sections of the continuous connection 11 and the intermittent connections 12 and 13 are shown to have the same shape, but may have cross-sections of different shapes. For example, as shown in Fig. 11, the continuous connection 11 may have a concave downward shape, and the intermittent connection 12 may have an upwardly convex or flat shape. The cross-sectional shapes of the connections 11, 12, and 13 may vary depending on the amount of resin for forming them. That is, if the amount of resin per unit length used to form the connection is small, the surface of the connection part may have a concave shape when viewed from a cross section in the width direction. Conversely, if the amount of resin per unit length used to form the connection is relatively large, the surface of the connection may have a flat or convex shape when viewed from a cross section in the width direction. S Since the continuous connection 11 is continuously present along the length direction, relatively small amount of resin per unit length can maintain good connection. Since each intermittent connection 12 and 13 has its finite length, the amount of resin required to maintain a good connection is larger than that of the continuous connection. In the optical fiber ribbon according to the embodiment of the present invention, a continuous connection and an intermittent connection are arranged adjacent to each other. If one has a concave shape and the other has a flat or convex shape, interference between the connections is reduced when the ribbon is rolled or folded. And, accordingly, the fiber optic ribbon can be mounted in the cable with a higher density.

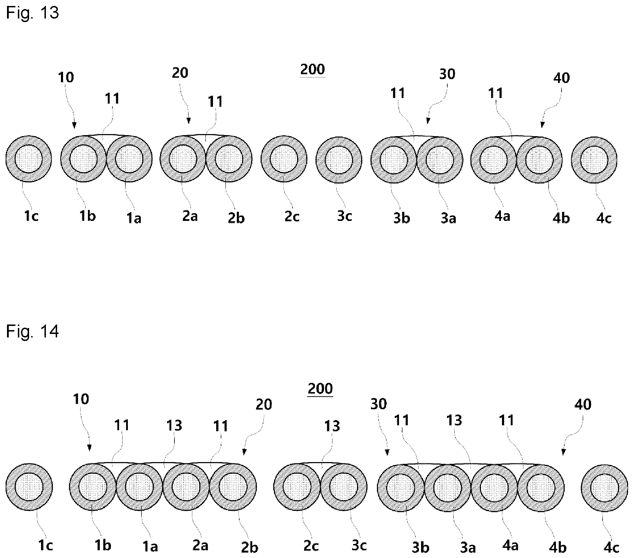

Fig. 12 shows a second embodiment of a possible arrangement according to the present invention of an optical fiber ribbon comprising twelve (12) optical fibers, Fig. 13 is a cross-sectional view taken along line A-A of Fig. 12, and Fig. 14 is a cross-sectional view along line B-B of Fig. 12. In the embodiment shown in Fig. 12, the cross-sectional view of the section a is omitted because it has the same shape as the cross-sectional view of Fig. 8.

As shown in Fig. 12, in the section b, the first intermittent connection 12 and the second intermittent connection 13 do not exist, and only the continuous connection 11 exists. In the section c, one of the optical fibers 1a belonging to the optical fiber pair of the first optical fiber unit 10 is connected by the second intermittent connection 13 with one of the optical fibers 2a belonging to the optical fiber pair of the second optical fiber unit 20. Similarly, one of the optical fibers 3a belonging to the optical fiber pair of the third optical fiber unit 30 is connected to one of the optical fibers 4a belonging to the optical fiber pair of the fourth optical fiber unit 40 by the second intermittent connection 13. Further, an optical fiber 2c that does not belong to the optical fiber pair of the second optical fiber unit 20 and an optical fiber 3c that does not belong to the optical fiber pair of the third optical fiber unit 30 are connected by the second intermittent connection 13.

In the embodiment illustrated in Figs. 12-14, cross-sections of the connections may also have different shape to each other.

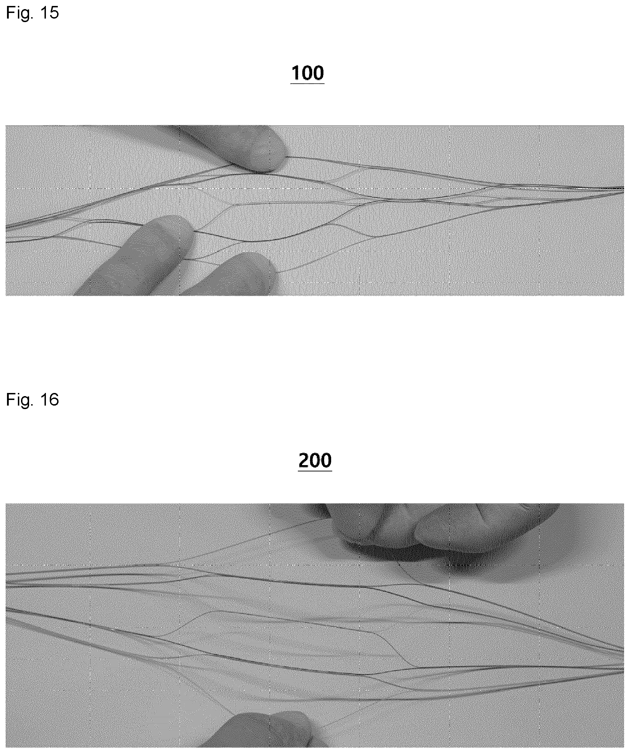

Fig. 15 shows a photograph of one of the sample products of the optical fiber ribbon having the arrangement shown in Fig. 7, and Fig. 16 shows a photograph of one of the sample products of the optical fiber ribbon having the arrangement shown in Fig. 12. The optical fiber used in each sample product has a diameter of 250 µm.

Two (2) samples of the optical fiber ribbon having the arrangement shown in Fig. 7 are prepared by adjusting the length of each section differently, and three (3) samples of the optical fiber ribbon having the arrangement shown in Fig. 12 prepared by adjusting the length of each section differently. In order to test the degree of rolling of each sample, the degree of interference was checked while passing each sample through a hole having an inner diameter of 1.5 mm and a hole having an inner diameter of 1.3 mm. Table 1 shows the intensity of interference according to the experiment. In the table, the interference strength 1 indicates a state in which there is no interference, and the interference strength increases from 2 to 6.

**[Table 1]**

| Sample | | | Hole Diamet er (mm) | section a | | section b | | section c | | section d | |
|---|---|---|---|---|---|---|---|---|---|---|---|
| Em b. | No. | Pitc h (m m) | | Interferen ce Strength | Leng th (mm) | Interferen ce Strength | Leng th (mm) | Interferen ce Strength | Leng th (mm) | Interferen ce Strength | Leng th (mm) |
| Fig. 7 | 00 1 | 180 | 1.5 | 1 | 60 | 1 | 30 | 1 | 60 | 1 | 30 |
| | | | 1.3 | 2 | | 4 | | 2 | | 4 | |
| | 00 5 | 120 | 1.5 | 1 | 40 | 1 | 20 | 1 | 40 | 1 | 20 |
| | | | 1.3 | 2.5 | | 4.5 | | 2.5 | | 4.5 | |
| Fig. 12 | 00 2 | 180 | 1.5 | 1 | 60 | 1 | 30 | 1 | 60 | 1 | 30 |
| | | | 1.3 | 1 | | 3 | | 1 | | 3 | |
| | 00 3 | 90 | 1.5 | 1 | 30 | 1 | 15 | 1 | 30 | 1 | 15 |
| | | | 1.3 | 3 | | 6 | | 1 | | 6 | |
| | 00 | 120 | 1.5 | 1 | 40 | 1 | 20 | 1 | 40 | 1 | 20 |
| | 4 | | 1.3 | 1 | | 4 | | 1 | | 4 | |

In Table 1, if the interference strength is 4 or less, it is set as good and the minimum value of each section is reviewed as follows: 1) section a is 40 mm or more, 2) section b is 20 mm or more, 3) section c is 30 mm or more. In addition, when the minimum value of each section is added, it can be seen that the minimum pitch in which the same connecting pattern is repeated is 110 mm.

As a result of evaluating the workability related to the fusion splicing of the optical fiber ribbon, the longer the section a, the higher the workability. Therefore, when increasing the pitch, it is preferable to increase the length of the section a.

Since a plurality of optical fiber ribbons are mounted in an optical cable, distinct markings are made for each optical fiber ribbon for identification. In the optical fiber ribbon according to the illustrated embodiments, it is preferable to make markings in the section a.

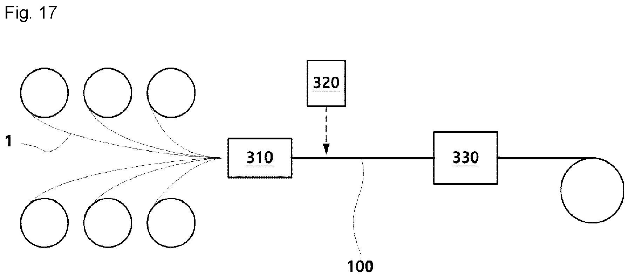

Fig. 17 schematically shows an apparatus for manufacturing the optical fiber ribbon according to the embodiment of the present invention.

Each optical fiber 1 is arranged parallel to each other in the connection forming apparatus 310, and connections are formed between each optical fiber according to the design. The connections may be made of a UV curable resin or a thermosetting resin. The connection curing apparatus 320 cures the connections formed on the optical fiber. The inspection apparatus 330 checks whether the connections of the optical fiber ribbon 100 are formed correctly.

In the illustrated embodiment, although it is shown that there is only one step of the connection forming apparatus 310, the connection may also be formed by a plurality of such steps.

The foregoing detailed description should not be construed as limiting in any respect and should be considered as illustrative. The scope of the present invention should be determined by reasonable interpretation of the appended claims, and all changes within the equivalent scope of the present invention are included in the scope of the present invention.

### Reference Signs List

1, 1a, 1b, 1c, 2a, 2b, 2c, 3a, 3b, 3c, 4a, 4b, 4c: optical fiber
10, 20, 30, 40: optical fiber unit
11: continuous connection
12: first intermittent connection
13: second intermittent connection
100, 200: optical fiber ribbon
310: connection forming apparatus
320: connection curing apparatus
330: inspection apparatus

## Claims

1. A rollable optical fiber ribbon, comprising:
at least two (2) optical fiber units, each of the optical fiber unit including: an optical fiber, an connected optical fiber pair having two (2) optical fibers connected in a longitudinal direction by a continuous connection, and a first intermittent connection which intermittently connects the optical fiber and the connected optical fiber pair; and,
a second intermittent connection which intermittently connects said at least two optical fiber units;
wherein the first intermittent connection and the second intermittent connection are arranged alternately with a distance in the longitudinal direction, and
wherein the continuous connection, the first connection and the second connection are arranged at a same one side of the ribbon between an upper side or a bottom side of the ribbon.

2. The rollable optical fiber ribbon according to claim 1, wherein a diameter of each of the optical fiber is 250µm, and wherein a length of the first intermittent connection (a) is equal to or greater than 40mm, the distance between the first intermittent connection and the second intermittent connection (b) is equal to or greater than 20mm, and a length of the second intermittent connection (c) is equal to or greater than 30mm.

3. The rollable optical fiber ribbon according to claim 1, wherein a distance between two (2) adjacent said first connections is equal to or greater than 110mm.

4. The rollable optical fiber ribbon according to claim 1, wherein two (2) adjacent optical fibers are contact to each other.

5. The rollable optical fiber ribbon according to claim 1, wherein two (2) adjacent optical fibers are being apart with a gap of equal to or smaller than 15µm.

6. The rollable optical fiber ribbon according to claim 1, wherein surfaces of the continuous connection, the first intermittent connection and the third intermittent connection are flat.

7. The rollable optical fiber ribbon according to claim 1, wherein surface of the continuous connection has a concave shape and surfaces of the first intermittent connection and the third intermittent connection have a flat or convex shape.

8. An optical fiber cable comprising a rollable optical fiber ribbon according to claim 1.

9. A method for fabricating a rollable optical fiber ribbon according to claim 1, comprising the steps of:
(a) arranging a plurality of optical fibers in parallel; and
(b) forming the continuous connection, the first intermittent connection and the second intermittent connection on the plurality of optical fibers arranged in the step (a).
